# FASCICULE DE BREVET EUROPEEN

(11) **EP 0 637 186 B1**
(45) Date de publication et mention de la délivrance du brevet: **31.10.2001**
(21) Numéro de dépôt: 94460022.0
(22) Date de dépôt: 06.07.1994
(51) Int. Cl.: H04Q 11/04, H04J 3/16

(54) **Systèmes et multiplexeurs pour l'allocation d'intervalle de temps**
Systeme und Multiplexer zur Zuordnung von Zeitintervallen
Systems and multiplexers for the allocation of time intervals

(30) Priorité: 30.07.1993 FR 9309645
(43) Date de publication de la demande: 01.02.1995
(73) Titulaire: FRANCE TELECOM exploitant public, 75015 Paris (FR)
(72) Inventeur: Boyer, Pierre, F-22300 Lannion (FR); Dugeon, Olivier, F-22560 Pleumeur-Bodou (FR); Servel, Michel, F-22300 Lannion (FR)
(74) Mandataire: Maillet, Alain

(56) Documents cités:
- EP-A- 0 476 210
- EP-A- 0 503 560

## Description

La présente invention concerne des systèmes d'allocation d'intervalle de temps et des multiplexeurs pourvus d'un de ces systèmes d'allocation d'intervalle de temps.

Ces systèmes et multiplexeurs trouvent application dans des systèmes de transmission de données, lesdites données se trouvant sous la forme de cellules de longueur fixe. Chaque cellule du système de transmission est associée à un circuit virtuel de communication. Chaque cellule est constituée, d'une part, d'une partie dite en-tête dans lequel sont stockées des informations relatives aux systèmes, notamment le numéro du circuit virtuel auquel elle appartient et, d'autre part, d'une partie où sont présents les messages à transmettre.

On connaît déjà des multiplexeurs utilisés dans de tels systèmes de communication. L'architecture de ces multiplexeurs connus est basée sur celle des techniques de commutation. Ainsi, le document de brevet EP-A-108 028 décrit une matrice de commutation qui est bien adaptée à la commutation de n multiplex entrants sur n multiplex sortants à des débits très élevés. Cependant, lorsque les débits sont plus faibles, il peut s'avérer intéressant d'utiliser des multiplexeurs dont l'architecture est mieux adaptée à ces débits.

Par exemple, dans le document de brevet FR-A-2 538 984, il est décrit des multiplexeurs basés sur une architecture dite à bus à n entrées en parallèle et une sortie sur le bus, n pouvant être égal à huit pour un débit global commuté de l'ordre de 155 Mbits/s. Cependant, l'accès au bus pose des problèmes d'allocation d'intervalle de temps afin d'éviter notamment la collision de cellules ou le débordement des files de sortie.

Des solutions sont connues mais elles ne sont pas toujours à adaptées aux problèmes nés du contrôle de l'espacement entre cellules émises appartenant à un circuit virtuel, notamment lorsqu'est présente une différence notable de débits entre deux cellules consécutives.

L'invention a pour but de proposer des systèmes d'allocation d'intervalle de temps qui puissent résoudre les problèmes évoqués ci-dessus lorsque ces systèmes sont appliqués à des multiplexeurs. Ces systèmes ne se limitent pas à ces applications particulières.

Un autre but de l'invention est également de proposer des multiplexeurs à n entrées et une sortie qui permettent de résoudre les problèmes d'accès au bus.

Un autre but de l'invention est également de proposer des multiplexeurs qui permettent également d'intégrer des moyens de contrôle et d'espacement des émissions de cellules appartenant au même circuit virtuel.

A cet effet, un système d'allocation d'un intervalle de temps selon un premier mode de réalisation de l'invention est caractérisé en ce qu'il comporte une unité de gestion d'intervalles de temps délivrant, à chaque intervalle de temps, le dernier intervalle de temps qui a été alloué et une pluralité de compteurs reliés entre eux en série de manière que l'entrée d'un compteur soit reliée à la sortie du compteur précédent dans la série, l'entrée du premier compteur étant reliée à la sortie de l'unité de gestion d'intervalles de temps, chaque compteur étant associé à une entrée portant un signal de demande d'allocation d'intervalle de temps et étant pourvu d'une entrée de commande prévue pour recevoir ledit signal de demande d'allocation et délivrant, soit la valeur d'intervalle de temps présente sur son entrée si ledit signal de demande d'allocation est inactif, soit la valeur d'intervalle de temps présente sur son entrée incrémentée d'une unité si ledit signal de demande est actif, la sortie de chaque compteur étant reliée à l'entrée d'un registre dont l'entrée de commande est prévue pour recevoir ledit signal de demande correspondant, chaque registre délivrant alors, si ledit signal de demande correspondant est actif, un signal d'intervalle de temps alloué.

La présente invention concerne un système d'allocation d'un intervalle de temps destiné à allouer un intervalle de temps à une cellule d'un système de communication présente sur l'entrée d'un circuit d'entrée d'un multiplexeur, ledit multiplexeur comportant plusieurs circuits d'entrée regroupés en groupe formant une pluralité de groupes de circuits d'entrée. Ce système est alors caractérisé en ce qu'il comporte une unité de gestion d'intervalles de temps délivrant, à chaque intervalle de temps, le dernier intervalle de temps qui a été alloué, lesdits groupes de circuits d'entrée étant reliés entre eux en série de manière que l'entrée d'un groupe soit reliée à la sortie du groupe précédent dans la série, l'entrée du premier groupe étant reliée à la sortie de l'unité de gestion d'intervalles de temps, chaque groupe comportant plusieurs additionneurs respectivement associés à des signaux de demande d'allocation d'intervalle de temps émanant respectivement desdits circuits d'entrée dudit groupe correspondant, lesdits additionneurs ayant une première entrée reliée à l'entrée dudit groupe, chaque additionneur de rang (j) ayant sa seconde entrée reliée à circuit de calcul pour y recevoir un signal représentatif du nombre de signaux de demande d'allocation actifs présents sur les entrées associées aux additionneurs du même groupe mais de rang inférieur ainsi que sur l'entrée avec laquelle il est associé, et sa sortie qui est reliée à l'entrée d'un registre dont l'entrée de commande est prévue pour recevoir ledit signal de demande d'allocation associé, chaque registre délivrant alors, si ledit signal de demande correspondant est actif, un signal d'intervalle de temps qui est alloué à la cellule qui est présente sur l'entrée du circuit d'entrée correspondant, la sortie du dernier additionneur d'un groupe formant en outre la sortie dudit groupe.

Selon une autre caractéristique de l'invention, l'unité de gestion d'intervalle de temps reçoit la valeur d'intervalle de temps qui est présente sur la sortie du dernier compteur ou du dernier groupe et la délivre au premier compteur ou premier groupe en tant que valeur du dernier intervalle de temps alloué.

Selon une autre caractéristique de l'invention, lorsque la différence entre la valeur d'intervalle de temps du signal reçu par l'unité de gestion d'intervalle de temps et la valeur de l'intervalle de temps courant est nulle, l'unité de gestion d'intervalle de temps délivre un signal dont la valeur correspond à la valeur de l'intervalle de temps courant plus un.

Selon une autre caractéristique de l'invention, chaque compteur est prévu pour que, lorsque la différence entre la valeur d'intervalle de temps du signal présent sur son entrée et la valeur de l'intervalle de temps courant dépasse une valeur de seuil prédéterminée, il n'incrémente plus la valeur d'intervalle de temps sur son entrée, même si une cellule est présente sur l'entrée correspondante.

L'invention concerne donc également un multiplexeur du type qui comprend n entrées destinées à recevoir des cellules de communication dans des intervalles de temps cellule et une sortie destinée à fournir, pendant un intervalle de temps cellule déterminé, une desdites cellules.

Selon une caractéristique de l'invention, il est essentiellement constitué de:
- un système d'allocation d'un intervalle de temps selon l'un des modes de réalisation précédemment décrits, dont les entrées de demande d'allocation d'intervalle de temps sont respectivement associées aux entrées dudit multiplexeur,
- une pluralité de mémoires de cellule dont les entrées d'écriture sont respectivement reliées aux entrées dudit multiplexeur et dont les sorties de lecture sont reliées à la sortie dudit multiplexeur, l'entrée d'adressage en écriture d'une mémoire étant reliée à la sortie du registre correspondant dudit système d'allocation et l'entrée d'adressage en lecture de ladite mémoire étant reliée à la sortie d'heure locale d'une base de temps,
- une pluralité de moyens de demande engendrant respectivement des signaux de demande d'allocation d'intervalle de temps, chacun desdits signaux étant rendu actif si une cellule est présente sur l'entrée correspondante dudit multiplexeur.

Selon une autre caractéristique de l'invention, un compteur ou un additionneur et un circuit de calcul, la mémoire de cellule associée, le registre associé et les moyens de demande associés forment ensemble un unique circuit dit circuit d'entrée.

Selon une autre caractéristique de l'invention, une mémoire de cellule et le registre associé forment ensemble un unique circuit dit circuit d'entrée, les additionneurs et le circuit de calcul d'un groupe étant réunis pour former un unique circuit de commande de groupe.

Selon une autre caractéristique de l'invention, lesdits moyens de demande servant à engendrer un signal de demande d'allocation actif sont constitués d'une mémoire de traduction dont l'entrée d'adressage en lecture est destinée à recevoir le numéro de circuit virtuel d'une cellule sur l'entrée correspondante.

L'invention concerne également un multiplexeur qui est également du type permettant l'émission des cellules appartenant à un même circuit virtuel à des intervalles de temps sensiblement régulièrement espacés temporellement.

Selon une caractéristique de l'invention, il est essentiellement constitué de:
- un système d'allocation d'un intervalle de temps selon l'un des modes de réalisation précédemment décrits, dont les entrées de demande d'allocation d'intervalle de temps sont respectivement associées aux entrées dudit multiplexeur,
- une pluralité de mémoires de cellule dont les entrées d'écriture sont respectivement reliées aux entrées dudit multiplexeur et dont les sorties de lecture sont reliées à la sortie dudit multiplexeur, l'entrée d'adressage en écriture de chacune desdites mémoires de cellule étant reliée à la sortie d'un circuit de détermination d'adresse d'écriture associé,
- une pluralité de mémoires d'adresse dont l'entrée d'écriture de chacune est reliée audit circuit de détermination d'adresse d'écriture correspondant et dont l'entrée d'adressage en écriture de chacune est reliée à la sortie d'une unité de détermination de l'heure estimée d'émission de cellule associée, les entrées d'adressage en lecture desdites mémoires d'adresse étant reliées à la sortie d'heure locale d'une base de temps,
- une pluralité de mémoires d'émission dont l'entrée d'écriture de chacune est reliée à la sortie de lecture de la mémoire d'adresse correspondante, dont la sortie de lecture de chacune est reliée à l'entrée d'adressage en lecture de la mémoire de cellule correspondante, l'entrée d'adressage en écriture d'une mémoire d'émission étant reliée à la sortie du registre dudit système d'allocation correspondant et l'entrée d'adressage en lecture de ladite mémoire étant reliée à la sortie d'heure locale de ladite base de temps, chaque signal de demande d'allocation étant rendu actif au moment de la lecture de la mémoire d'adresse correspondante.

Selon une autre caractéristique de l'invention, chaque unité de détermination de l'heure estimée d'émission de cellule est constituée d'une mémoire de traduction dont chacune des cases est adressée en lecture par le numéro de circuit virtuel auquel appartient la cellule présente sur l'entrée correspondante, chaque case de ladite mémoire de traduction comportant un champ dans lequel est stockée une période affectée audit circuit virtuel correspondant et un champ contenant l'heure théorique d'émission de la dernière cellule émise appartenant audit circuit virtuel, les sorties de lecture de ladite mémoire correspondant respectivement auxdits champs étant respectivement reliées aux entrées d'une unité de calcul prévue pour délivrer sur sa sortie ledit signal d'heure théorique d'émission ou heure estimée d'émission et pour le fournir à l'entrée d'adressage en écriture de ladite mémoire d'adresse correspondante, ledit signal étant également fourni à l'entrée en écriture de la mémoire de traduction pour son écriture dans le champ correspondant.

Selon une autre caractéristique de l'invention, il comporte en outre un circuit de disponibilité d'adresses qui, en fonction de la disponibilité de la case de la mémoire d'adresse adressée par le signal d'heure théorique d'émission, détermine un signal d'heure estimée d'émission.

Les caractéristiques de l'invention mentionnées ci-dessus, ainsi que d'autres, apparaîtront plus clairement à la lecture de la description d'exemples de réalisation préférés, ladite description étant faite en relation avec les dessins joints parmi lesquels:
la Fig. 1 est un schéma synoptique d'un multiplexeur selon un premier mode de réalisation de l'invention,
la Fig. 2 est un schéma synoptique d'un circuit d'entrée d'un multiplexeur selon l'invention,
la Fig. 3 est un schéma synoptique d'un groupe de circuits d'entrée servant à former un multiplexeur selon une variante de réalisation selon l'invention,
la Fig. 4 est un schéma synoptique d'un circuit de gestion de groupe équipant un groupe de circuits d'entrée selon la Fig. 3,
la Fig. 5 est un schéma synoptique d'un circuit d'entrée d'un multiplexeur selon un autre mode de réalisation de l'invention,
la Fig. 6 est un schéma synoptique d'un groupe de circuits d'entrée d'un multiplexeur, lesdits circuits d'entrée étant réalisés selon le mode représenté à la Fig. 5,
la Fig. 7 est un schéma synoptique d'un système d'allocation d'intervalle de temps selon l'invention, et
la Fig. 8 est un schéma synoptique d'un circuit d'entrée d'un multiplexeur selon l'invention qui est équipé de moyens d'espacement d'émission de cellules.

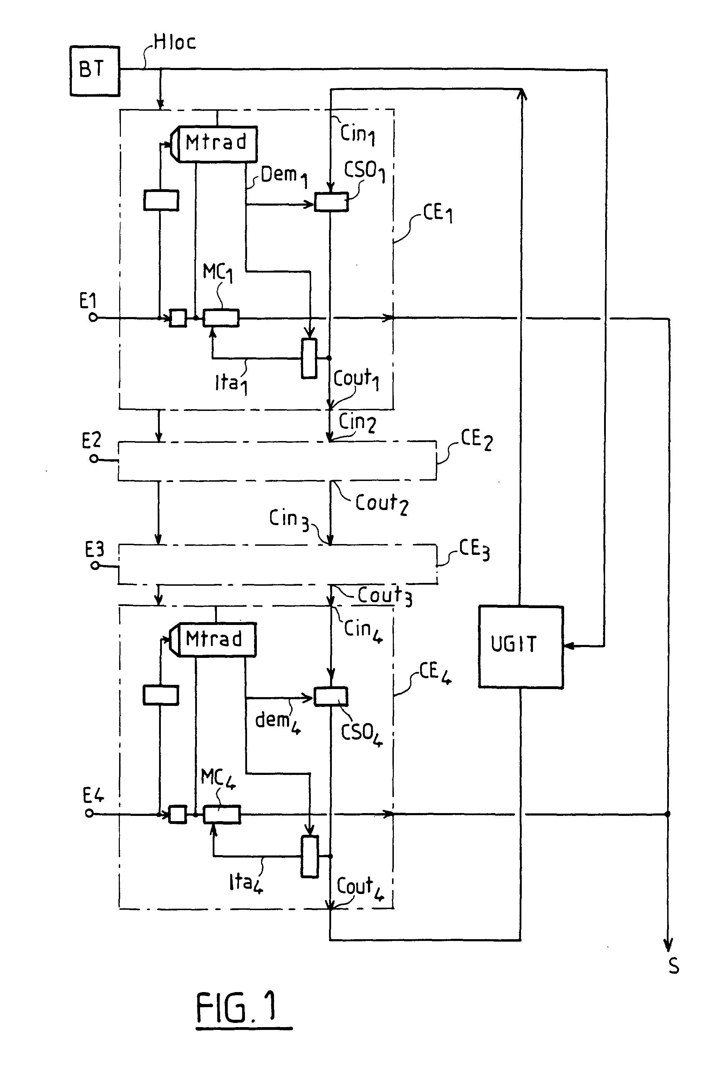

Le multiplexeur représenté à la Fig. 1 comprend quatre entrées E₁ à E₄ et une sortie S. Les entrées E₁ à E₄ sont respectivement reliées aux entrées de circuits d'entrée CE₁ à CE₄ dont les sorties sont reliées à la sortie S. Il comprend encore une unité de gestion d'intervalle de temps UGIT prévue pour délivrer, à chaque intervalle de temps, un signal représentatif du dernier intervalle qui a été alloué. Il comprend encore une base de temps BT dont la sortie qui délivre un signal d'heure locale Hloc est reliée à chacune des entrées correspondantes des circuits d'entrée CE₁ à CE₄ et également à une entrée de l'unité UGIT.

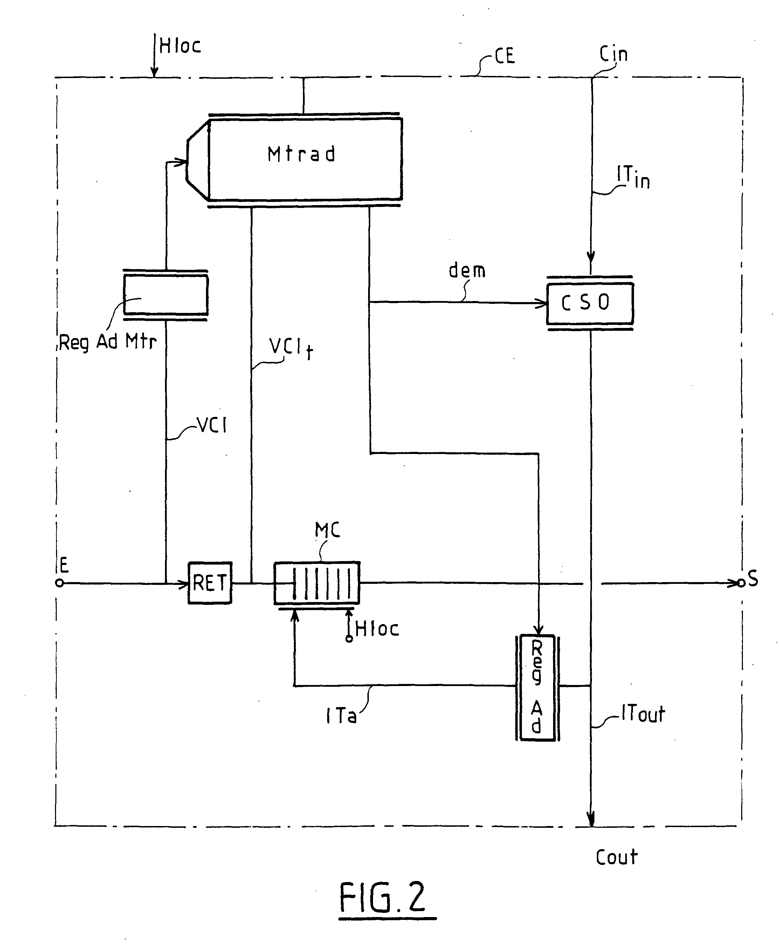

On a représenté à la Fig. 2 le schéma synoptique d'un circuit d'entrée CE. Le circuit CE représenté comprend, essentiellement, une entrée E multifilaire, un registre RegAdMtr, une mémoire de traduction Mtrad, une mémoire de cellules MC, un circuit de retard RET, un registre RegAd et un compteur CSO.

La mémoire Mtrad est une mémoire du type mémoire à accès aléatoire dont les cases de mémorisation sont respectivement associées aux circuits virtuels que peut traiter le système. Dans chacune de ses cases, sont stockés, à l'initialisation du système, le numéro de circuit virtuel VCIₜ correspondant au circuit virtuel associé à ladite case ainsi qu'un bit dem, dit par la suite bit de demande d'allocation d'intervalle de temps.

La mémoire MC est une mémoire comportant un certain nombre de cases dont chacune est prévue pour mémoriser une cellule.

Les fils qui portent le numéro de circuit virtuel VCI auquel appartient la cellule présente sur l'entrée E sont reliés à l'entrée du registre RegAdMtr dont la sortie est reliée à l'entrée d'adressage en lecture de la mémoire de traduction Mtrad. En lecture, celle-ci délivre un numéro de circuit virtuel traduit VCIₜ qui est alors fourni à l'entrée de la mémoire MC, ainsi que ledit bit de demande d'allocation dem.

Les autres fils sont reliés, via un circuit de retard RET, à l'entrée de la mémoire MC. Le circuit de retard RET est prévu pour compenser les retards de temps introduits par la mémoire Mtrad.

La mémoire MC a sa sortie de lecture qui est reliée à la sortie S du circuit CE.

Chaque case de la mémoire MC est adressée en lecture par le signal d'heure locale Hloc délivrée par la base de temps BT du multiplexeur et est adressée en écriture par le signal d'intervalle de temps alloué ITa délivré par le registre RegAd.

Le compteur CSO a son entrée qui est reliée à l'entrée dite d'intervalle de temps Cin du circuit d'entrée CE et sa sortie qui est reliée à la sortie d'intervalle de temps Cout du circuit CE. Il comprend encore une entrée de commande qui est reliée à une sortie de la mémoire Mtrad pour y recevoir le signal de demande d'allocation dem.

Le compteur CSO reçoit sur son entrée une valeur d'intervalle de temps ITin présente sur l'entrée Cin du circuit d'entrée CE. Si le signal de demande d'allocation dem sur son entrée de commande n'est pas actif, cette valeur d'intervalle de temps est délivrée sur sa sortie et donc sur la sortie d'intervalle de temps Cout du circuit d'entrée CE. Par contre, si le signal de demande d'allocation dem est actif, c'est-à-dire lorsqu'une cellule est présente sur l'entrée E du circuit d'entrée CE, la valeur d'intervalle de temps ITin sur l'entrée du compteur CSO est incrémentée d'une unité et la valeur incrémentée est délivrée sur sa sortie et donc sur la sortie Cout du circuit d'entrée CE.

Le registre RegAd a son entrée qui est reliée à la sortie du compteur CSO. Il a une entrée de commande qui est reliée à la sortie de la mémoire Mtrad qui porte le signal de demande d'allocation dem. Lorsque le signal de demande d'allocation dem est actif, la valeur d'intervalle de temps ITout présente sur l'entrée du registre RegAd est transférée sur sa sortie et forme le signal d'intervalle de temps alloué ITa. Lorsque le signal dem n'est pas actif, la valeur ITa sur la sortie du registre RegAd n'est pas modifiée quelle que soit la valeur d'intervalle de temps ITout présente sur son entrée.

On voit sur la Fig. 1 que la sortie d'intervalle de temps Coutₙ du circuit d'entrée CEₙ de rang n est reliée à l'entrée d'intervalle de temps Cin_{n + 1} du circuit d'entrée CE_{n + 1} de rang n + 1. On voit également que l'entrée d'intervalle de temps du premier circuit d'entrée CE₁ est reliée à la sortie de l'unité UGIT et que l'entrée de cette dernière est reliée à la sortie d'intervalle de temps Cout₄ du dernier circuit d'entrée CE₄.

Le multiplexeur représenté à la Fig. 1 comporte quatre entrées E₁ à E₄ et une sortie S mais l'invention concerne également des multiplexeurs à n entrées et une sortie S.

On notera, par ailleurs, qu'il n'est pas nécessairement constitué d'une pluralité de circuits d'entrée comme cela est représenté mais peut être un unique et même circuit. Le fait qu'il présente plusieurs circuits d'entrée CE procure l'avantage qu'il est modulaire.

Le fonctionnement d'un multiplexeur selon l'invention est le suivant.

A l'initialisation du multiplexeur, l'unité de gestion d'intervalle de temps UGIT délivre sur sa sortie un signal dont la valeur d'intervalle de temps est égale à l'intervalle de temps courant Hloc plus un. Cette valeur est fournie sur l'entrée Cin₁ du premier circuit d'entrée CE₁.

Supposons, dans un premier temps, qu'il n'y ait aucune cellule sur les entrées E₁ à E₄.

La valeur d'intervalle de temps qui est présente sur l'entrée Cin₁ se retrouve sur la sortie Cout₁ et, par conséquent, sur l'entrée Cin₂ du circuit d'entrée CE₂. En effet, l'absence de cellules sur l'entrée E₁ implique que le signal de demande d'allocation dem₁ qui est délivré par la mémoire Mtrad₁ sur l'entrée de commande du compteur CSO₁ n'est pas actif.

On comprendra que, pour la même raison, la valeur de compte présente sur l'entrée Cin₂ du circuit d'entrée CE₂ se retrouve sur la sortie Cout₂ et donc sur l'entrée Cin₃ du circuit d'entrée CE₃. Si aucune cellule n'est présente sur aucune des entrées des circuits CE₁ à CE₄, la valeur d'intervalle de temps en sortie du dernier circuit d'entrée CE₄ se retrouve sur l'entrée de l'unité de gestion UGIT.

L'unité de gestion UGIT est prévue pour que, lorsque la différence entre la valeur d'intervalle de temps du signal sur la sortie du dernier compteur CSO₄ et la valeur de l'intervalle de temps courant Hloc tel qu'il est délivré par la base de temps BT est nulle, elle délivre, sur sa sortie et donc sur l'entrée Cin₁ du premier circuit d'entrée CE₁, un signal d'intervalle de temps dont la valeur correspond à la valeur de l'intervalle de temps courant Hloc plus un.

Par ailleurs, chaque compteur CSOᵢ est prévu pour que, lorsque la différence entre la valeur d'intervalle de temps du signal ITᵢₙ présent sur son entrée et la valeur de l'intervalle de temps courant Hloc dépasse une valeur de seuil prédéterminée, il n'incrémente plus la valeur d'intervalle de temps ITᵢₙ sur son entrée, même si une cellule est présente sur l'entrée Eᵢ correspondante.

Si, dans un intervalle de temps Hloc donné, une cellule est présente sur une entrée Ei d'un circuit d'entrée CEi, son en-tête, contenant le numéro de VCI auquel elle appartient, est fourni, via le registre RegAdMtr, à l'entrée d'adressage de la mémoire Mtrad. Celle-ci délivre alors, d'une part, un en-tête contenant le numéro de VCIₜ traduit et, d'autre part, le signal de demande d'allocation demᵢ. La partie information de la cellule ainsi que son en-tête traduit VCIₜ sont alors présents sur l'entrée d'écriture de la mémoire de cellule MCᵢ. Le signal de demande demᵢ est fourni à l'entrée de commande du compteur CSOᵢ ainsi qu'à l'entrée de commande du registre RegAdᵢ. Le compteur CSOᵢ incrémente d'une unité la valeur d'intervalle de temps qui est présente sur son entrée Cinᵢ et délivre la valeur incrémentée sur sa sortie en tant que nouvelle valeur d'intervalle de temps alloué.

Cette nouvelle valeur d'intervalle de temps se trouve sur l'entrée du registre RegAd et également sur sa sortie. Elle adresse en écriture la mémoire MC.

La cellule sur l'entrée de la mémoire MC est donc stockée à l'adresse dont la valeur est égale à la nouvelle valeur d'intervalle de temps ITa. On constatera que chaque valeur d'intervalle de temps qui circule de circuit d'entrée en circuit d'entrée représente la valeur du dernier intervalle de temps qui a été alloué pour l'émission d'une cellule.

La mémoire MC est adressée en lecture par le signal d'heure locale Hloc délivrée par la base de temps BT. La cellule qui est stockée à l'adresse correspondant à la valeur de ce signal Hloc est ainsi délivrée sur la sortie de la mémoire MC et se retrouve sur la sortie S du multiplexeur.

Pour fonctionner correctement, chaque compteur CSO doit présenter un temps de propagation de la valeur d'intervalle de temps non négligeable par rapport à la durée élémentaire d'un intervalle de temps.

Selon une première variante de réalisation, chaque intervalle de temps délivré par la base de temps BT est subdivisé en un certain nombre de micro-intervalles t₁ à tₘ et un de ces micro-intervalles de temps est affecté à chaque circuit d'entrée CEᵢ. Les micro-intervalles de temps non affectés sont pris en charge par l'unité UGIT. Lorsqu'une valeur d'intervalle de temps est présente, à l'instant tᵢ, sur l'entrée Cinᵢ, elle ou la nouvelle valeur d'intervalle de temps se retrouve sur l'entrée Cin_{i + 1} du circuit d'entrée suivant CE_{i + 1} au temps t_{i + 1}.

Selon une autre variante de réalisation, tous les circuits d'entrée CE₁ à CE₄ fonctionnent de façon strictement synchrone. Les compteurs CSO de ces circuits d'entrée ne sont cette fois plus reliés à la base de temps BT. Le temps de propagation de la valeur de compte d'un circuit d'entrée au suivant est égal non à une division de la durée d'un intervalle de temps mais au temps de propagation dans le compteur CSO d'un circuit d'entrée CE.

On notera que chaque compteur CSO peut alors être remplacé par un additionneur qui additionne un à la valeur d'intervalle de temps ITin présente sur son entrée seulement si le signal de demande d'allocation dem est actif.

On notera que la mémoire Mtrad de chaque circuit d'entrée constitue selon un mode de réalisation parmi d'autres modes un moyen pour engendrer un signal de demande dem lorsqu'une cellule est présente sur une entrée E correspondante du multiplexeur.

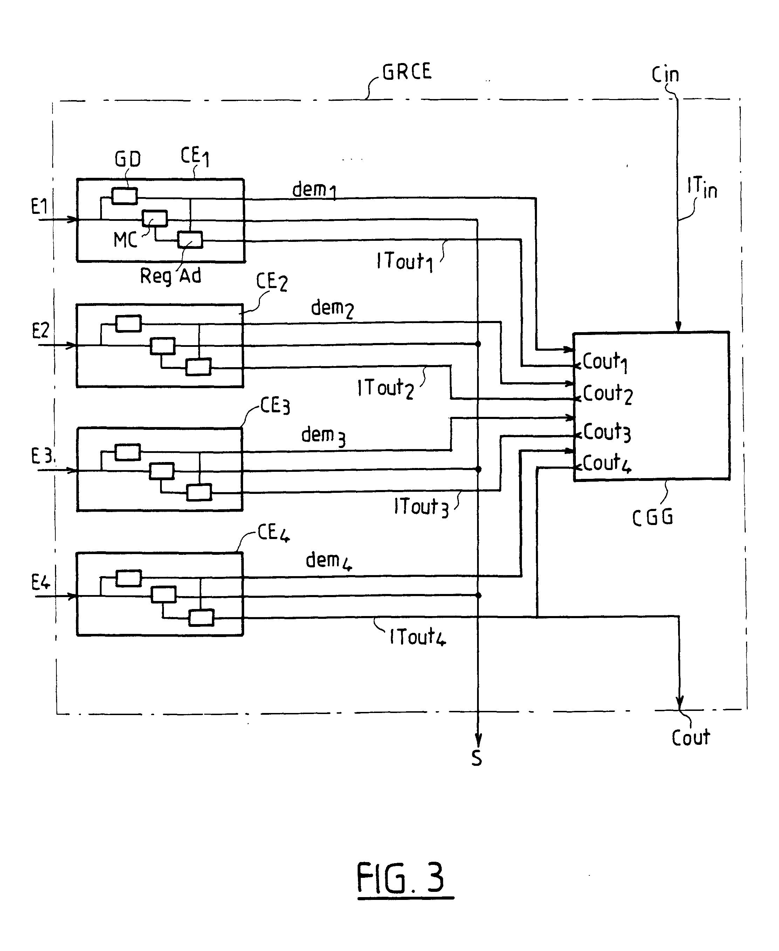

On a représenté à la Fig. 3 un groupe GRCE de quatre circuits d'entrées CE₁ à CE₂ reliés à un circuit de gestion de groupe CGG. Comme on le comprendra par la suite, un tel groupe de circuits d'entrée permet d'augmenter le nombre d'entrées Eᵢ traitées sans pour autant augmenter la vitesse de traitement.

A la Fig. 3, le circuit d'entrée CE₁ est représenté avec sa mémoire de cellule MC, ses moyens de génération d'une demande d'allocation d'intervalle de temps GD et son registre RegAd. Les moyens GD délivrent le signal de demande dem₁ qui est fourni à une entrée du circuit de gestion CGG, la sortie de la mémoire MC est reliée à la sortie S du groupe GRCE, et l'entrée du registre RegAd est reliée à une sortie Cout₁ du circuit de gestion CGG. Les autres circuits d'entrées CE₂ à CE₄ constitués et reliés de manière totalement semblable au circuit d'entrée CE₁.

Le circuit de gestion de groupe CGG a une entrée qui est reliée à l'entrée Cin du groupe GRCE pour y recevoir la valeur du dernier intervalle de temps alloué ITin. La sortie d'intervalle de temps Cout du groupe GRCE est constitué par le signal délivré par le circuit de gestion de groupe CGG sur sa sortie Cout₄.

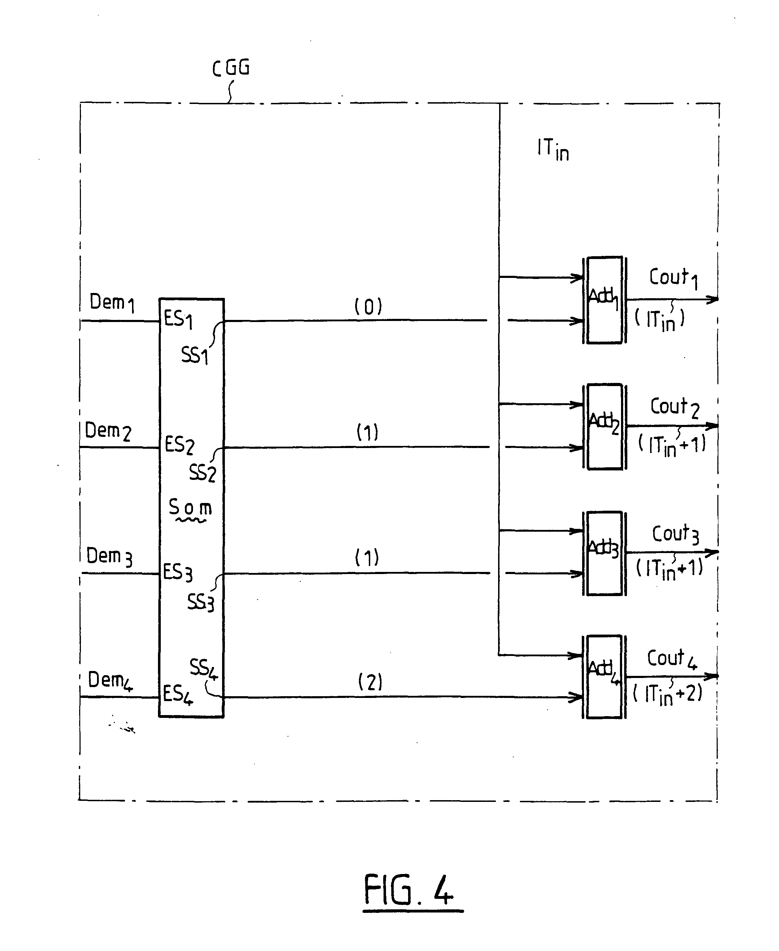

On a représenté à la Fig. 4 un circuit de gestion CGG. Il est constitué d'un circuit de calcul Som qui est pourvu de quatre entrées ES₁ à ES₄ qui reçoivent les signaux de demande d'allocation dem₁ à dem₄ engendrés par les circuits d'entrée CE₁ à CE₄ du groupe GRCE (Fig. 3). Il comporte quatre sorties SS₁ à SS₄ dont la première porte la valeur 1 ou 0 selon que le premier signal de demande d'allocation dem₁ est actif ou pas, dont la seconde porte la valeur du nombre de signaux de demande dem₁ et dem₂ actifs, dont la troisième porte la valeur du nombre de signaux dem₁, dem₂ et dem₃ actifs et dont la quatrième sortie porte la valeur du nombre de signaux dem₁ à dem₄ actifs. Chaque sortie SSᵢ du circuit Som est reliée à une première entrée d'un additionneur Addᵢ dont la seconde entrée est prévue pour recevoir la valeur d'intervalle de temps ITin présente sur l'entrée Cin du groupe GRCE. La sortie de chaque additionneur Addᵢ constitue la sortie Coutᵢ du circuit de gestion de groupe CGG.

Le fonctionnement d'un tel groupe de circuits d'entrée est le suivant. Par exemple, si, sur les entrées E₂ et E₄ du groupe GRCE sont respectivement présentes des cellules, les signaux de demande d'allocation dem₂ et dem₄ sont actifs. Il s'ensuit que la première sortie SS₁ du circuit Som du circuit de gestion de groupe CGG porte la valeur 0, la seconde SS₂ porte la valeur 1, la troisième SS₃ porte la valeur 1 également et la dernière SS₄ porte la valeur 2. Les entrées des registres RegAd des circuits d'entrées CE₁ à CE₄ reçoivent donc des valeurs d'intervalle de temps respectivement égales à la valeur ITin (ITout₁ = ITin), une valeur égale à ITin + 1 (ITout₂ = ITin + 1), une valeur ITin + 1 et une valeur ITin + 2 (ITout₄ = ITin + 2). Les valeurs d'intervalle de temps de cet exemple sont entre parenthèses sur la Fig. 4. Seuls les registres des circuits d'entrée CE₂ et CE₄ stockeront les valeurs d'intervalle de temps ITin + 1 et ITin + 2 présentes sur leurs entrées. Les autres ne seront pas modifiées. Par ailleurs, la valeur ITin + 2 est fournie à un autre groupe de quatre circuits d'entrées.

Le fait de regrouper les circuits d'entrées CE₁ à CE₄ dans un groupe GRCE commandé par un circuit de gestion de groupe CGG permet d'étendre la capacité de traitement en nombre d'entrées, sans augmenter la vitesse de fonctionnement.

On notera que le groupe de circuits d'entrées GRCE représenté aux Figs. 3 et 4 pourrait également constituer à lui seul un multiplexeur à quatre entrées E₁ à E₄.

On a représenté un groupe GRCE qui comporte quatre circuits d'entrée. On comprendra que, sur le même principe, on pourrait augmenter ou diminuer ce nombre sans pour cela sortir du cadre tracé par la présente invention. Cependant, le nombre d'interconnexions augmente assez vite avec le nombre de circuits d'entrée.

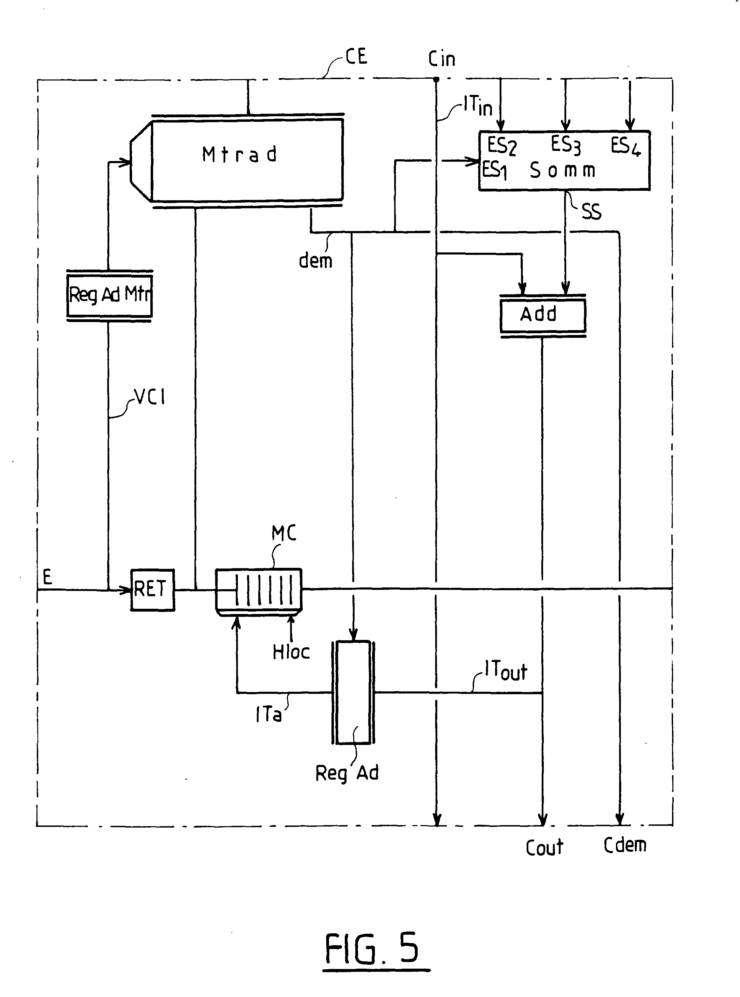

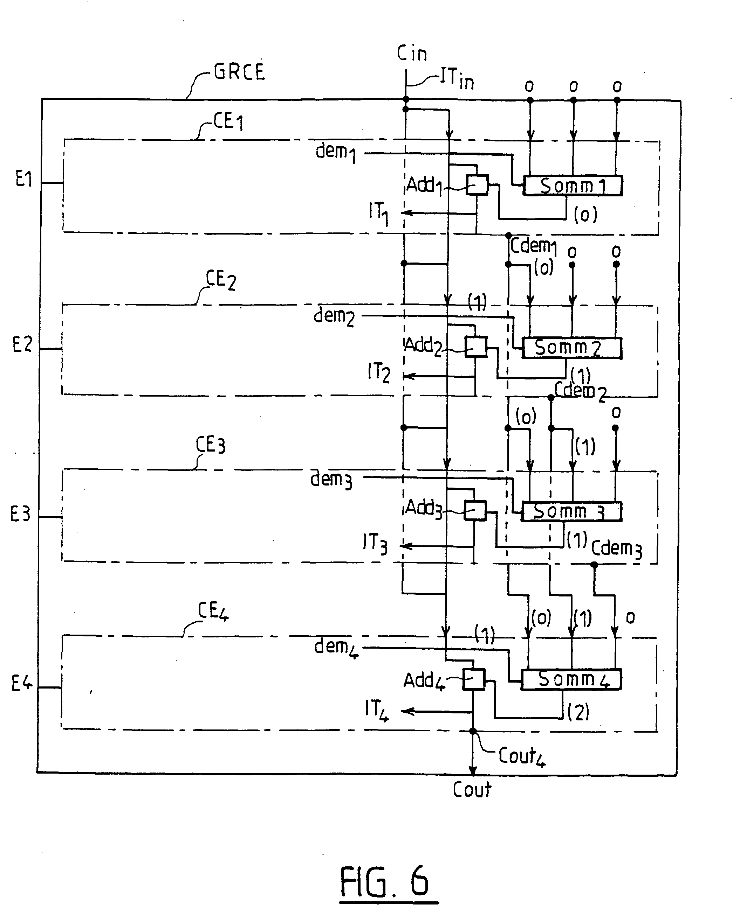

Pour éviter l'emploi d'un circuit supplémentaire de gestion d'un groupe, on a prévu un circuit d'entrée CE tel que celui qui est représenté à la Fig.5. On a représenté, Fig. 6, un groupe de quatre circuits d'entrée selon la Fig. 5.

Par rapport au circuit d'entrée CE de la Fig. 2, le circuit d'entrée CE de la Fig. 5 comporte en outre un circuit de sommation Somm à quatre entrées ES₁ à ES₄ destinées à recevoir respectivement des signaux de demande d'allocation Dem₁ à dem₄ tel que cela sera expliqué ci-après en relation avec la Fig. 6. Le circuit de sommation Somm délivre sur sa sortie un signal SS représentatif du nombre de ses entrées ES₁ à ES₄ qui portent un signal de demande d'allocation dem actif et le fournit à une première entrée d'un circuit d'addition Add dont l'autre entrée est prévue pour recevoir la valeur d'intervalle de temps ITin présent sur l'entrée Cin du circuit d'entrée CE. La sortie du circuit d'addition Add constitue la sortie Cout du circuit d'entrée CE et le signal ITout qu'elle porte est fourni à l'entrée du registre RegAd. Le signal de demande d'allocation dem se retrouve sur la sortie Cdem du circuit d'entrée CE.

Quatre circuits d'entrée CE₁ à CE₄ tels que celui qui est représenté à la Fig. 5, sont interconnectés de la manière montrée à la Fig. 6. Les quatre circuits d'entrée CE₁ à CE₄ représentés forment ensemble un groupe GRCE. Les circuits d'entrée CE₁ à CE₄ sont représentés par des pointillés mixtes et par leurs circuits Somm₁ à Somm₄ et par leurs circuits Add₁ à Add₄. On constate que les entrées ES₁ des circuits de sommation Somm₁ à Somm₄ reçoivent respectivement les signaux de demande d'allocation dem₁ à dem₄. On constate également que les trois entrées ES₂ à ES₄ du circuit de sommation Somm₁ du premier circuit d'entrée CE₁ sont reliées à zéro, que l'entrée ES₂ du circuit Somm₂ du circuit d'entrée CE₂ est reliée à la sortie Cdem₁ du premier circuit CE₁ alors que les autres entrées ES₃ et ES₄ du circuit Somm₂ sont reliées à zéro. L'entrée ES₂ du circuit de sommation Somm₃ du troisième circuit d'entrée CE₃ est reliée à la sortie Cdem₁ du premier circuit CE₁, son entrée ES₃ est reliée à la sortie Cdem₂ du second circuit CE₂ alors que son entrée ES₄ est reliée à zéro. Enfin, l'entrée ES₂ du circuit de sommation Somm₄ du quatrième circuit d'entrée CE₄ est reliée à la sortie Cdem₁ du premier circuit d'entrée CE₁, l'entrée ES₃ à la sortie Cdem₂ du second circuit CE₂ et l'entrée ES₄ à la sortie Cdem₃ du troisième circuit. La sortie Cout₄ du quatrième circuit d'entrée CE₄ constitue la sortie d'intervalle de temps Cout du groupe GRCE.

L'entrée Cin de tous les circuits d'entrée CE₁ à CE₄ est reliée à l'entrée d'intervalle Cin du groupe GRCE.

Le fonctionnement d'un tel groupe GRCE est le suivant. Supposons, comme dans l'exemple précédent, que les entrées E₂ et E₄ d'un groupe comprenant les entrées E₁ à E₄ ont effectué une demande, c'est-à-dire que les signaux de demande d'allocation dem₂ et dem₄ sont actifs. La sortie du premier circuit Somm₁ porte la valeur 0 si bien que la valeur de IT₁ est égale à ITin sur l'entrée Cin du groupe GRCE. La sortie Cdem₁ du premier circuit d'entrée CE₁ porte la valeur zéro.

La sortie du second circuit Somm₂ porte la valeur un dans la mesure où le signal de demande dem₂ est actif. La valeur IT₂ est donc égale à la valeur ITin + 1. Le signal dem₂ étant actif, la cellule présente sur l'entrée E₂ est donc stockée dans la mémoire MC du circuit d'entrée CE₂ à l'adresse correspondant à ITin + 1. La valeur Cdem₂ du second circuit CE₂ est égale à un.

La sortie du troisième circuit Somm₃ porte la valeur un dans la mesure où seule l'entrée ES₃ du circuit Somm₃ porte la valeur un, les autres étant à zéro. La valeur IT₃ est égale à la valeur ITin + 1 mais elle n'est pas utilisée dans le circuit d'entrée CE₃. La sortie Cdem₃ porte la valeur un.

La sortie du quatrième circuit Somm₄ porte la valeur deux dans la mesure où le signal de demande d'allocation dem₄ est actif et où l'entrée ES₃ du circuit Somm₄ porte une valeur égale à un. La valeur IT₄ est égale à ITin + 2 et la cellule sur l'entrée E4 est stockée à l'adresse de la mémoire MC du circuit d'entrée CE₄. La sortie Cout₄ porte donc la valeur ITin + 2. Cette valeur correspond, dans le système, au dernier intervalle de temps IT pour lequel a été prévu une émission de cellule.

On notera que le temps de propagation de la valeur d'intervalle de temps ITin de l'entrée Cin à la sortie Cout est sensiblement celui d'un seul circuit d'entrée CE selon la Fig. 2.

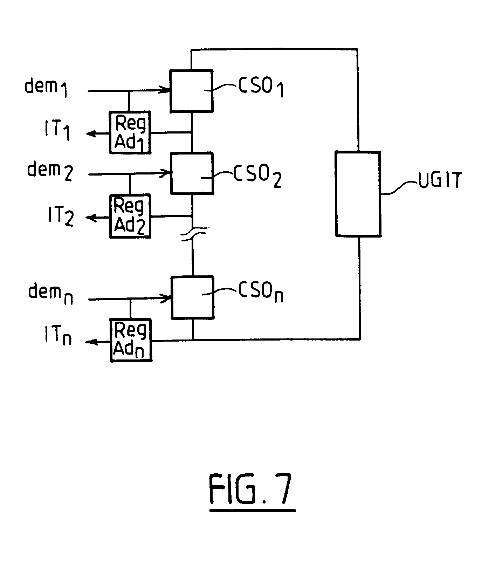

On a représenté à la Fig. 7 un système d'allocation d'intervalle de temps selon l'invention. Il comprend une unité de gestion d'intervalles de temps UGIT et une pluralité de compteurs CSO₁ à CSOₙ reliés entre eux en série de manière que l'entrée d'un compteur CSOᵢ soit reliée à la sortie du compteur précédent CSO_{i - 1} dans la série, de manière que l'entrée du premier compteur CSO₁ soit reliée à la sortie de l'unité de gestion d'intervalles de temps UGIT et que la sortie du dernier compteur CSOₙ soit reliée à une entrée de l'unité UGIT. Chaque compteur CSOᵢ est associé à une entrée portant un signal de demande d'allocation demᵢ et est pourvu d'une entrée de commande prévue pour recevoir ledit signal demᵢ.

Chaque compteur CSOᵢ est prévu pour délivrer, soit la valeur d'intervalle de temps présente sur son entrée si ledit signal de demande d'allocation demᵢ correspondant est inactif, soit la valeur d'intervalle de temps présente sur son entrée incrémentée d'une unité si ledit signal de demande demᵢ correspondant est actif. La sortie de chaque compteur CSOᵢ est reliée à l'entrée d'un registre RegAdᵢ dont l'entrée de commande est prévue pour recevoir ledit signal de demande demᵢ correspondant

Chaque registre RegAdᵢ est prévu pour délivrer, si ledit signal de demande demᵢ correspondant est actif, un signal d'intervalle de temps alloué ITᵢ.

Le fonctionnement de l'unité UGIT est le même que celui de l'unité UGIT du multiplexeur de la Fig. 1. Il en est de même des compteurs CSO.

On remarquera que le multiplexeur de la Fig. 1 peut être considéré comme étant constitué d'une pluralité de mémoires de cellule MC associées chacune à une entrée Eᵢ du multiplexeur, une pluralité de moyens de demande Mtrad et d'un système d'allocation d'intervalle de temps tel que celui qui est représenté à la Fig. 7. Chaque mémoire MC est adressée en écriture par le signal d'intervalle de temps ITᵢ délivré par le registre RegAdᵢ du système d'allocation.

Le fonctionnement du système d'allocation de la Fig. 7 peut donc se déduire du fonctionnement du multiplexeur selon la Fig. 1.

On comprendra que, de même, les multiplexeurs de la Fig. 3 et de la Fig. 5 peuvent être considérés comme étant pourvus de moyens d'allocation d'intervalle de temps, d'une pluralité de mémoires de cellule et d'une pluralité de moyens de génération de signaux de demande d'allocation.

On notera que chaque circuit d'entrée CEᵢ peut être équipé d'un dispositif d'espacement temporel de deux émissions de cellules appartenant à un même circuit virtuel tel que l'un des dispositifs qui sont notamment décrits dans les documents de brevet FR-A-2 668 324 et FR-A-2 686 205.

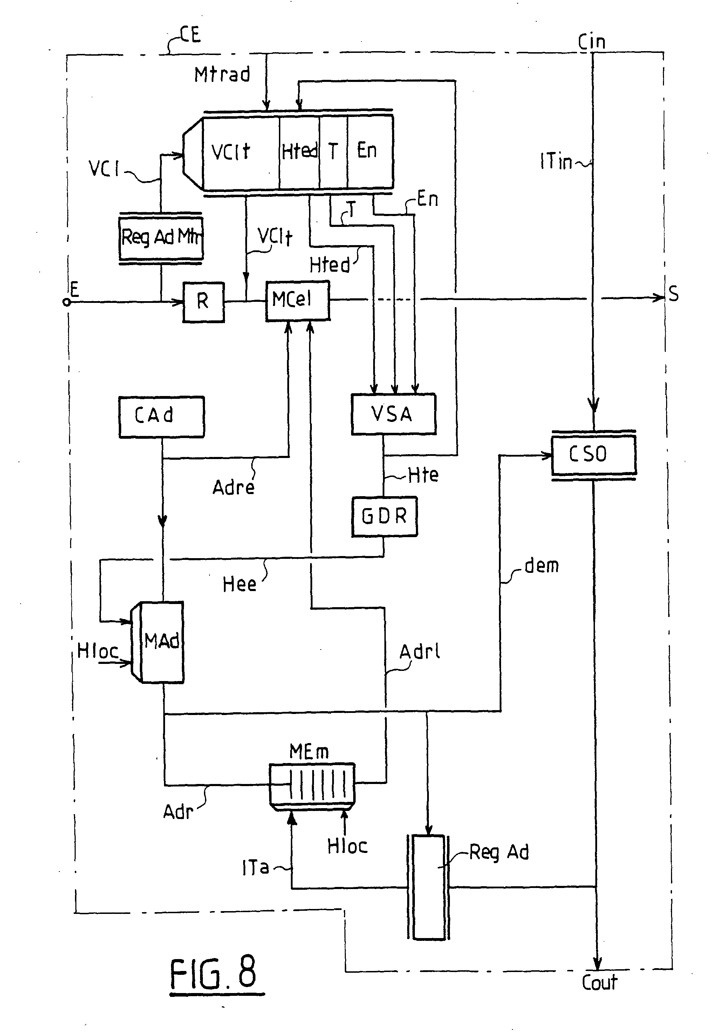

A la Fig. 8, on a représenté un circuit d'entrée CE qui est pourvu de moyens d'espacement des cellules présentes sur son entrée E. Un tel système a pour but l'émission des cellules appartenant à un même circuit virtuel à des intervalles de temps sensiblement régulièrement espacés temporellement, par exemple d'une période T.

Ce circuit d'entrée CE comporte un compteur CSO qui a une entrée Cin et une sortie Cout. Le compteur CSO est commandé par un signal de demande d'allocation d'intervalle de temps dem présent sur son entrée de commande. Il comporte encore un registre RegAd dont l'entrée est reliée à la sortie du compteur CSO et dont l'entrée de commande est prévue pour recevoir le signal de demande d'allocation dem. Il délivre sur sa sortie un signal d'intervalle de temps alloué ITa.

On aura reconnu là une partie d'un système d'allocation d'intervalle de temps selon la Fig. 7. On notera que le multiplexeur décrit ici pourrait être pourvu d'un système d'allocation d'intervalle de temps avec extension (voir Figs. 3 et 5).

Le multiplexeur selon la Fig. 8 comporte encore une mémoire de cellules MCel dont l'entrée d'écriture est reliée, via un circuit de retard R, à l'entrée E du circuit d'entrée CE. La sortie de la mémoire MCel est reliée à la sortie S du circuit CE. La mémoire MCel est prévue pour pouvoir stocker les cellules qui sont présentes sur l'entrée E du circuit CE.

Il comporte une mémoire Mtrad dont chaque case, adressée par un numéro VCI de circuit virtuel, contient, outre un numéro de circuit virtuel traduit VCIt et un signal de validation En, une partie, dite de contexte, contenant l'heure théorique d'émission Hted de la dernière cellule émise ayant le numéro de circuit virtuel VCI associé à la case ainsi que la période de temps T affectée aux cellules qui appartiennent à ce circuit virtuel VCI.

Les cellules qui sont stockées dans la mémoire MCel le sont avec leur numéro de circuit virtuel traduit VCIt tel qu'il est délivré par la mémoire Mtrad.

Les sorties de lecture de la mémoire Mtrad portant l'heure théorique Hted, la période T et le bit de validation En sont reliées aux entrées correspondantes d'un circuit VSA de calcul de l'heure théorique d'émission Hte de la cellule courante présente sur l'entrée E. La sortie du circuit de calcul VSA est reliée à l'entrée d'écriture dans le champ Hted de la mémoire Mtrad. Elle est également reliée à l'entrée d'un circuit de calcul d'adresse disponible GDR dont la sortie est reliée à l'entrée d'adressage en écriture d'une mémoire d'adresse MAd.

La fonction du circuit de calcul GDR est de calculer la première adresse inoccupée de la mémoire MAd de valeur Hee correspondant à une heure d'émission estimée, ceci à partir de l'adresse qui correspond à l'heure théorique Hte délivrée par le circuit de calcul VSA. Un tel circuit est par exemple constitué par le circuit décrit dans le document FR-A-2 617 302 sous la référence MAD.

Un circuit de calcul d'adresse d'écriture disponible CAd a sa sortie qui est reliée à l'entrée d'adressage en écriture de la mémoire de cellules MCel pour délivrer une adresse disponible Adre afin de mémoriser, à cette adresse Adre, la cellule courante présente sur l'entrée E. Le circuit CAd peut être constitué d'un compteur dont la sortie s'incrémente d'une unité à chaque arrivée d'une cellule sur l'entrée E.

La sortie du circuit CAd est également reliée à l'entrée d'écriture de la mémoire MAd. Ainsi, l'adresse Adre, c'est-à-dire l'adresse où est stockée la cellule courante, est mémorisée, dans la mémoire MAd à une adresse qui correspond à l'heure estimée d'émission Hee délivrée par le circuit GDR.

L'entrée d'adressage en lecture de la mémoire MAd est reliée à la base de temps pour y recevoir le signal d'heure locale Hloc. La sortie de lecture de la mémoire MAd est reliée à une entrée d'écriture d'une mémoire d'émission MEm dont la sortie de lecture est reliée à l'entrée d'adressage en lecture de la mémoire MCel pour y délivrer une adresse de lecture Adrl. Pendant la lecture de la mémoire MAd, sa sortie délivre le signal de demande d'allocation d'intervalle de temps dem à l'entrée de commande du compteur CSO.

La mémoire MEm a son entrée d'adressage en écriture qui est reliée à la sortie du registre RegAd.

La mémoire MEm a son entrée d'adressage en lecture qui est reliée à la base de temps BT pour y recevoir le signal d'heure locale Hloc.

Le fonctionnement du circuit représenté à la Fig. 8 est le suivant.

Lorsqu'une cellule est présente sur l'entrée E, son numéro de circuit virtuel adresse, via le registre RegAdMtr, la mémoire Mtrad. Elle délivre alors un numéro de circuit virtuel traduit VCIt.

Elle délivre également l'heure théorique d'émission Hted de la dernière cellule émise appartenant au même circuit virtuel que la cellule courante présente sur l'entrée E. Elle délivre encore la période T qui est affectée à ce circuit virtuel. Elle délivre enfin un signal de validation En.

L'heure Hted, la période T et le signal de validation En sont délivrés au circuit de calcul VSA lequel délivre l'heure théorique d'émission Hte de la cellule présente sur l'entrée E. Cette heure est par exemple calculée par addition de l'heure Hted et de la période T. Elle est délivrée à une entrée d'écriture de la mémoire Mtrad pour son stockage à la place de la valeur Hted.

L'heure Hte est délivrée au circuit de calcul GDR qui délivre l'heure estimée d'émission Hee et la fournit à l'entrée d'adressage en écriture de la mémoire MAd.

Le circuit de calcul CAd délivre le signal d'adresse Adre correspondant à une adresse non-occupée de la mémoire MCel. Ce signal d'adresse Adre est délivré à l'entrée d'adressage en écriture de la mémoire MCel pour qu'elle y stocke la cellule qui est présente sur l'entrée E du circuit CE. Ce signal d'adresse est également fourni à l'entrée d'écriture de la mémoire MAd. L'adresse à laquelle est stockée, dans la mémoire MCel, la cellule sur l'entrée E est donc stockée dans la mémoire MAd à une adresse qui correspond à l'heure estimée d'émission Hee calculée par le circuit GDR.

A chaque temps cellule Tc, qu'une cellule soit présente ou pas sur l'entrée E du circuit d'entrée CE, une nouvelle valeur d'intervalle de temps ITin se retrouve sur l'entrée Cin. Elle correspond au dernier intervalle de temps cellule qui a déjà été alloué.

A un temps Tc donné, la mémoire MAd est adressée en lecture par le signal d'heure locale Hloc délivré par la base de temps BT. La mémoire MAd délivre alors un signal d'adresse Adr correspondant à l'adresse dans la mémoire MCel d'une cellule dont l'heure d'émission estimée est égale à l'heure locale Hloc. Elle délivre de plus un signal de demande d'allocation dem actif qui commande alors le compteur CSO. Celui-ci incrémente donc la valeur d'intervalle de temps ITin qui se trouve sur son entrée Cin et délivre cette valeur incrémentée sur la sortie Cout.

Le signal de demande d'allocation dem étant actif, le registre RegAdr délivre également le signal d'intervalle de temps alloué ITa sur l'entrée d'adressage en écriture de la mémoire MEm. La valeur d'adresse Adr délivrée par la mémoire MAd est donc stockée dans la mémoire MEm à une adresse qui correspond à l'intervalle de ITa.

Pendant ce temps Tc, la mémoire MEm est également adressée en lecture par le signal d'heure locale Hloc délivré par la base de temps. La mémoire MEm délivre alors un signal d'adresse Adrl qui est fourni à la mémoire MCel. La cellule stockée à l'adresse Adrl correspondant à ce signal est alors émise. On comprendra qu'elle est émise pendant le temps cellule qui lui a été attribué au moment du stockage de son adresse dans la mémoire MEm.

## Revendications

1. Système d'allocation d'un intervalle de temps, **caractérisé en ce qu'**il comporte une unité de gestion d'intervalles de temps (UGIT) délivrant, à chaque intervalle de temps, le dernier intervalle de temps qui a été alloué et une pluralité de compteurs (CSO₁ à CSOₙ) reliés entre eux en série de manière que l'entrée d'un compteur (CSOᵢ) soit reliée à la sortie du compteur précédent (CSO_{i - 1}) dans la série, l'entrée du premier compteur (CSO₁) étant reliée à la sortie de l'unité de gestion d'intervalles de temps (UGIT), chaque compteur (CSOᵢ) étant associé à une entrée portant un signal de demande d'allocation d'intervalle de temps (demᵢ) et étant pourvu d'une entrée de commande prévue pour recevoir ledit signal de demande d'allocation (demᵢ) et délivrant, soit la valeur d'intervalle de temps (ITin) présente sur son entrée si ledit signal de demande d'allocation (demᵢ) est inactif, soit la valeur d'intervalle de temps présente sur son entrée incrémentée d'une unité (ITin + 1) si ledit signal de demande (demᵢ) est actif, la sortie de chaque compteur (CSOᵢ) étant reliée à l'entrée d'un registre (RegAdᵢ) dont l'entrée de commande est prévue pour recevoir ledit signal de demande (demᵢ) correspondant, chaque registre (RegAdᵢ) délivrant alors, si ledit signal de demande correspondant (demᵢ) est actif, un signal d'intervalle de temps alloué (ITa).

2. Système d'allocation d'un intervalle de temps à une cellule d'un système de communication présente sur l'entrée d'un circuit d'entrée (CEᵢ) d'un multiplexeur, ledit multiplexeur comportant plusieurs circuits d'entrée regroupés en groupe formant une pluralité de groupes (GRCE₁ à GRCEₙ) de circuits d'entrée, **caractérisé en ce qu'**il comporte une unité de gestion d'intervalles de temps (UGIT) délivrant, à chaque intervalle de temps, le dernier intervalle de temps qui a été alloué, lesdits groupes (GRCE₁ à GRCEₙ) de circuits d'entrée étant reliés entre eux en série de manière que l'entrée d'un groupe (GRCEᵢ) soit reliée à la sortie du groupe précédent (GRCEᵢ₋₁) dans la série, l'entrée du premier groupe étant reliée à la sortie de l'unité de gestion d'intervalles de temps (UGIT), chaque groupe (GRCE) comportant plusieurs additionneurs (Addᵢ) respectivement associés à des signaux de demande d'allocation d'intervalle de temps (demi) émanant respectivement desdits circuits d'entrée (CEᵢ) dudit groupe (GRCE) correspondant, lesdits additionneurs (Addᵢ) ayant une première entrée reliée à l'entrée (Cin) dudit groupe (GRCEᵢ), chaque additionneur (Addⱼ) de rang (j) ayant sa seconde entrée reliée à circuit de calcul (Som, Sommⱼ) pour y recevoir un signal représentatif du nombre de signaux de demande d'allocation actifs (dem₁ à demⱼ₋₁) présents sur les entrées associées aux additionneurs du même groupe mais de rang inférieur ainsi que sur l'entrée avec laquelle il est associé, et sa sortie qui est reliée à l'entrée d'un registre (RegAdⱼ) dont l'entrée de commande est prévue pour recevoir ledit signal de demande d'allocation (demⱼ) associé, chaque registre (RegAdⱼ) délivrant alors, si ledit signal de demande (demⱼ) correspondant est actif, un signal d'intervalle de temps (ITⱼ) qui est alloué à la cellule qui est présente sur l'entrée du circuit d'entrée correspondant, la sortie du dernier additionneur (Addⱼ) d'un groupe (GRCEᵢ) formant en outre la sortie dudit groupe (GRCEᵢ).

3. Système d'allocation d'intervalles de temps selon la revendication 1 ou 3, **caractérisé en ce que** l'unité de gestion d'intervalle de temps (UGIT) reçoit la valeur d'intervalle de temps qui est présente sur la sortie du dernier compteur (CSOₙ) ou du dernier groupe (GRCEₙ) et la délivre au premier compteur (CSO₁) ou premier groupe (GRCE₁) en tant que valeur du dernier intervalle de temps alloué.

4. Système d'allocation d'intervalles de temps selon une des revendications précédentes, **caractérisé en ce que**, lorsque la différence entre la valeur d'intervalle de temps du signal reçu par l'unité de gestion d'intervalle de temps (UGIT) et la valeur de l'intervalle de temps courant (Hloc) est nulle, l'unité de gestion l'intervalle de temps (UGIT) délivre un signal dont la valeur correspond à la valeur de l'intervalle de temps courant plus un (Hloc + 1).

5. Système d'allocation d'intervalles de temps selon une des revendications précédentes, **caractérisé en ce que** chaque compteur (CSOᵢ) est prévu pour que, lorsque la différence entre la valeur d'intervalle de temps du signal (ITᵢₙ) présent sur son entrée et la valeur de l'intervalle de temps courant (Hloc) dépasse une valeur de seuil prédéterminée, il n'incréments plus la valeur d'intervalle de temps (ITᵢₙ) sur son entrée, même si une cellule est présente sur l'entrée (Eᵢ) correspondante.

6. Multiplexeur du type qui correspond n entrées (E₁ à Eₙ) destinées à recevoir des cellules de communication dans des intervalles de temps cellule et une sortie (S) destinés à fournir, pendant un intervalle de temps cellule déterminé, une desdites cellules, **caractérisé en ce qu'**il est essentiellement constitué de:
- un système d'allocation d'un intervalle de temps selon l'une des revendications 1 à 5, dont les entrées de demande d'allocation sont respectivement associées aux entrées (E₁ à Eₙ) dudit multiplexeur,
- - une pluralité de mémoires de cellule (MC₁ à MCₙ) dont les entrées d'écriture sont respectivement reliées aux entrées (E₁ à Eₙ) dudit multiplexeur et dont les sorties de lecture sont reliées à la sortie (S) dudit multiplexeur, l'entrée d'adressage en écriture d'une mémoire (MCᵢ) étant reliée à la sortie du registre correspondant (RegAdᵢ) dudit système d'allocation et l'entrée d'adressage en lecture de ladite mémoire étant reliée à la sortie d'heure locale (Hloc) d'une base de temps,
- une pluralité de moyens de demande (Mtrad₁ à Mtradₙ) engendrant respectivement des signaux de demande d'allocation d'intervalle de temps(dem₁ à dem₂), chacun desdits signaux étant rendu actif si une cellule est présente sur l'entrée correspondante dudit multiplexeur.

7. Multiplexeur selon la revendication 6, **caractérisé en ce qu'**un compteur (CSOᵢ) ou un additionneur (Addᵢ) et un circuit de calcul (Som, Sommᵢ), la mémoire de cellule associée (MCᵢ), le registre (RegAdᵢ) associé et les moyens de demande (Mtradᵢ) associés forment ensemble un unique circuit dit circuit d'entrée (CEᵢ).

8. Multiplexeur selon la revendication 6, **caractérisé en ce qu'**une mémoire de cellule (MCᵢ) et le registre (RegAdᵢ) associé forment ensemble un unique circuit dit circuit d'entrée (CEᵢ), les additionneurs (Add) et le circuit de calcul (Somm) d'un groupe (GRCE) étant réunis pour former un unique circuit de commande de groupe (CGG).

9. Multiplexeur selon une des revendications 6, 7 ou 8, **caractérisé en ce que** lesdits moyens de demande servant à engendrer un signal de demande d'allocation actif (dem) sont constitués d'une mémoire de traduction (Mtrad) dont l'entrée d'adressage en lecture est destinée à recevoir le numéro de circuit virtuel d'une cellule sur l'entrée correspondante.

10. Multiplexeur du type qui comprend n entrées (E₁ à Eₙ) destinées à recevoir des cellules de communication dans des intervalles de temps cellule et une sortie (S) destinée à fournir, pendant un intervalle de temps cellule déterminé, une desdites cellules, ledit multiplexeur étant également du type permettant l'émission des cellules appartenant à un même circuit virtuel à des intervalles de temps sensiblement régulièrement espacés temporellement, **caractérisé en ce qu'**il est essentiellement constitué de:
- un système d'allocation d'un intervalle de temps selon l'une des revendications 1 à 5, dont les entrées de demande d'allocation d'intervalle de temps sont respectivement associées aux entrées (E₁ à Eₙ) dudit multiplexeur,
- une pluralité de mémoires de cellule (MCel₁ à MCelₙ) dont les entrées d'écriture sont respectivement reliées aux entrées (E₁ à Eₙ) dudit multiplexeur et dont les sorties de lecture sont reliées à la sortie (S) dudit multiplexeur, l'entrée d'adressage en écriture de chacune desdites mémoires de cellule (MCel) étant reliée à la sortie d'un circuit de détermination d'adresse d'écriture associé (CAd),
- une pluralité de mémoires d'adresse (MAd₁ à MAdₙ) dont l'entrée d'écriture de chacune est reliée audit circuit de détermination d'adresse d'écriture correspondant (CAd) et dont l'entrée d'adressage en écriture de chacune est reliée à la sortie d'une unité de détermination de l'heure estimée d'émission de cellule associée (Mtrad, VSA, GDR), les entrées d'adressage en lecture desdites mémoires d'adresse (MAd₁ à MAdₙ) étant reliées à la sortie d'heure locale (Hloc) d'une base de temps,
- une pluralité de mémoires d'émission (MEm) dont l'entrée d'écriture de chacune est reliée à la sortie de lecture de la mémoire d'adresse correspondante (MAd), dont la sortie de lecture de chacune est reliée à l'entrée d'adressage en lecture de la mémoire de cellule correspondante (MCel), l'entrée d'adressage en écriture d'une mémoire d'émission (MEmᵢ) étant reliée à la sortie du registre (RegAdᵢ) dudit système d'allocation correspondant et l'entrée d'adressage en lecture de ladite mémoire étant reliée à la sortie d'heure locale (Hloc) de ladite base de temps, chaque signal de demande d'allocation (demᵢ) étant rendu actif au moment de la lecture de la mémoire d'adresse correspondante.

11. Multiplexeur selon la revendication 10, **caractérisé en ce que** chaque unité de détermination de l'heure estimée d'émission de cellule est constituée d'une mémoire de traduction (Mtrad) dont chacune des cases est adressée en lecture par le numéro de circuit virtuel (VCI) auquel appartient la cellule présente sur l'entrée correspondante, chaque case d'une mémoire de traduction (Mtrad) comportant un champ dans lequel est stockée une période (T) affectée audit circuit virtuel correspondant et un champ contenant l'heure théorique d'émission (Hted) de la dernière cellule émise appartenant audit circuit virtuel, les sorties de lecture de ladite mémoire (Mtrad) correspondant respectivement auxdits champs étant respectivement reliées aux entrées d'une unité de calcul (VSA) prévue pour délivrer sur sa sortie ledit signal d'heure théorique d'émission (Hte) ou d'heure estimée d'émission (Hee) et pour le fournir à l'entrée d'adressage en écriture de ladite mémoire d'adresse correspondante (MAd), ledit signal étant également fourni à l'entrée en écriture de la mémoire de traduction (Mtrad) pour son écriture dans le champ correspondant (Hted).

12. Multiplexeur selon la revendication 11, **caractérisé en ce qu'**il comporte en outre un circuit de disponibilité d'adresses (GDR) qui, en fonction de la disponibilité de la case de la mémoire d'adresse (MAd) adressée par le signal d'heure théorique d'émission (Hte), détermine un signal d'heure estimée d'émission (Hee).

13. Multiplexeur selon une des revendications 10 à 12, **caractérisé en ce que** chaque circuit de détermination d'adresse d'écriture associé (CAd) est constitué d'un compteur qui s'incrémente d'une unité à chaque arrivée d'une cellule sur l'entrée (E) correspondante.

## Claims

1. Time interval allocation system, **characterised in that** it comprises a time interval management unit (UGIT) delivering, at each time interval, the last time interval which has been allocated and a plurality of counters (CSO₁ to CSOₙ) connected together in series in such a way that the input of a counter (CSOᵢ) is connected to the output of the preceding counter (CSO_{i - 1}) in the series, the input of the first counter CSO₁) being connected to the output of the time interval management unit (UGIT), each counter (CSOᵢ) being associated with an input carrying a time interval allocation request signal (demᵢ) and being provided with a control input provided for receiving the said allocation request signal (demᵢ) and delivering, either the time interval value (ITin) present on its input if the said allocation request signal (demᵢ) is inactive, or the time interval value present on its input incremented by one (ITin + 1) if the said request signal (demᵢ) is active, the output of each counter (CSOᵢ) being connected to the input of a register (RegAdᵢ) whose control input is provided for receiving the said corresponding request signal (demᵢ), each register (RegAdᵢ) then delivering, if the said corresponding request signal (demᵢ) is active, an allocated time interval signal (Ita).

2. System for allocating a time interval to a cell of a communication system present on the input of an input circuit (CEᵢ) of a multiplexer, the said multiplexer comprising several input circuits grouped into groups forming a plurality of groups (GRCE₁ to GRCEₙ) of input circuits, **characterised in that** it comprises a time interval management unit (UGIT) delivering, at each time interval, the last time interval which has been allocated, the said groups (GRCE₁ to GRCEₙ) of input circuits being connected together in series in such a way that the input of a group (GRCEᵢ) is connected to the output of the preceding group (GRCE_{i - 1}) in the series, the input of the first group being connected to the output of the time interval management unit (UGIT), each group (GRCE) comprising several adders (Addᵢ) respectively associated with time interval allocation request signals (demᵢ) respectively coming from the said input circuits (CEᵢ) of the said corresponding group (GRCE), the said adders (Addᵢ) having a first input connected to the input (Cin) of the said group (GRCEᵢ), each adder (Addⱼ) of rank (j) having its second input connected to a computing circuit (Som, Sommⱼ) in order to receive from it a signal representative of the number of active allocation request (demᵢ to dem_{j - 1}) signals present on the inputs associated with the adders of the same group but of lower rank and on the input with which it is associated, and its output which is connected to the inptu of a register (RegAdⱼ) whose control input is provided for receiving the said associated allocation request signal (demⱼ), each register (RegAdⱼ) then delivering, if the said corresponding request signal (demⱼ) is active, a time interval signal (ITⱼ) which is allocated to the cell which is present on the input of the corresponding input circuit, the output of the last adder (Addⱼ) of a group (GRCEᵢ) furthermore forming the output of the said group GRCEᵢ).

3. Time interval allocation system according to Claim 1 or 2, **characterised in that** the time interval management unit (UGIT) receives the time interval value which is present on the output of the counter (CSOₙ) or of the last group (GRCEₙ) and delivers it to the first counter (CSO₁) or first group (GRCE₁) as the value of the last allocated time interval.

4. Time interval allocation system according to one of the preceding claims, **characterised in that** when the difference between the time interval value of the signal received by the time interval management unit (UGIT) and the value of the current time interval (Hloc) is zero, the time allocation management unit (UGIT) delivers a signal whose value corresponds to the current time interval value plus one (Hloc + 1).

5. Time interval allocation system according to one of the preceding claims, **characterised in that** each counter (CSOᵢ) is provided such that, when the difference between the time interval value of the signal (ITᵢₙ) present on its input and the current time interval value (Hloc) exceeds a predetermined threshold value, it no longer increments the time interval value (ITᵢₙ) on its input, even if a cell is present on the corresponding input (Eᵢ).

6. Multiplexer of the type which comprises n inputs (E₁ to Eₙ) intended to receive communication cells in cell time intervals and one output (S) intended to supply one of the said cells during a defined cell time interval, **characterised in that** it essentially comprises:
- a time interval allocation system according to one of the Claims 1 to 5, whose time interval allocation request inputs are respectively associated with the inputs (E₁ to Eₙ) of the said multiplexer,
- a plurality of cell memories (MC₁ to MCₙ) whose write inputs are respectively connected to the inputs (E₁ to Eₙ) of the said multiplexer and whose read outputs are connected to the output (S) of the said multiplexer, the write addressing input of a memory (MCᵢ) being connected to the output of the corresponding register (RegAdᵢ) of the said allocation system and the read addressing input of the said memory being connected to the local time output (Hloc) of a time base,
- a plurality of request means (Mtrad₁ to Mtradₙ) respectively generating time interval allocation request signals (dem₁ to dem₂), each of the said signals being made active if a cell is present on the corresponding input of the said multiplexer.

7. Multiplexer according to Claim 6, **characterised in that** a counter (CSOᵢ) or an adder (Addᵢ) and a computing circuit (Som, Sommᵢ), the associated cell memory (MCi), the associated register (RegAdᵢ) and the associated request means (Mtradᵢ) together form a unique circuit called an input circuit (CEᵢ).

8. Multiplexer according to Claim 6, **characterised in that** a cell memory (MCᵢ) and the associated register (RegAdᵢ) together form a unique circuit called an input circuit (CEᵢ), the adders (Addᵢ) and the computing circuit (Somm) of a group (GRCE) being joined together to form a unique group control circuit (CGG).

9. Multiplexer according to one of Claims 6, 7 or 8, **characterised in that** the said request means serving to generate an active allocation request signal (dem) consist of a translation memory (Mtrad) whose read addressing input is intended to receive the number of the virtual circuit of a cell on the corresponding input.

10. Multiplexer of the type which comprises n inputs (E₁ to Eₙ) intended to receive communication cells in cell time intervals and an output (S) intended to supply, during a defined cell time interval, one of the said cells, the said multiplexer also being of the type allowing the transmission of cells belonging to a same virtual circuit at time intervals which are substantially regularly spaced in time, **characterised in that** it essentially consists of:
- a time interval allocation system according to one of Claims 1 to 5, whose time interval allocation request inputs are respectively associated with the inputs (E₁ to Eₙ) of the said multiplexer,
- a plurality of cell memories (MCel₁ to MCelₙ) whose write inputs are respectively connected to the inputs (E₁ to Eₙ) of the said multiplexer and whose read outputs are connected to the output (S) of the said multiplexer, the write addressing input of each of the said cell memories (MCel) being connected to the output of an associated write address determination circuit (CAd),
- a plurality of address memories (MAd₁ to MAdₙ) in which each one's write input is connected to the said corresponding write address determination circuit (CAd) and in which each one's write addressing input is connected to the output of a unit for determining the estimated time of transmission of the associated cell (Mtrad, VSA, GDR), the read addressing inputs of the said address memories (MAd₁ to MAdₙ) being connected to the local time output (Hloc) of a time base,
- a plurality of transmission memories (MEm) in which each one's write input is connected to the read output of the corresponding address memory (MAd), in which each one's read output is connected to the read addressing input of the corresponding cell memory (MCel), the write addressing input of a transmission memory (Memᵢ)being connected to the output of the register (RegAdᵢ) of the said corresponding allocation system and the read addressing input of the said memory being connected to the local time output (Hloc) of the said time base, each allocation request signal (demᵢ) being made active at the time of reading the corresponding address memory.

11. Multiplexer according to Claim 10, **characterised in that** each unit for determining the estimated cell transmission time consists of a translation memory (Mtrad) in which each of the buckets is read addressed by the number of the virtual circuit (VCI) to which the cell present on the corresponding input belongs, each bucket of the said translation memory (Mtrad) comprising a field in which is stored a period (T) allocated to the said corresponding virtual circuit and a field containing the theoretical time of transmission (Hted) of the last transmitted cell belonging to the said virtual circuit, the read outputs of the said memory (Mtrad) respectively corresponding to the said fields being respectively connected to the inputs of a computing unit (VSA) provided in order to deliver on its output the said theoretical time of transmission (Hte) or estimated time of transmission (Hee) and in order to supply it to the write addressing input of the said corresponding address memory (MAd), the said signal also being supplied to the write input of the translation memory (Mtrad) in order for it to be written into the corresponding field (Hted).

12. Multiplexer according to Claim 11, **characterised in that** it furthermore comprises an availability of addresses circuit (GDR) which, depending on the availability of the bucket of the address memory (MAd) addressed by the theoretical time of transmission signal (Hte), determines an estimated time of transmission signal (Hee).

13. Multiplexer according to one of Claims 10 to 12, **characterised in that** each associated write address determination circuit (Cad) consists of a counter which is incremented by one at each arrival of a cell on the corresponding input (E).

## Patentansprüche

1. System zur Zuordnung von Zeitintervallen **dadurch gekennzeichnet, daß** es eine Einheit zur Verwaltung von Zeitintervallen (UGIT), die für jedes Zeitintervall das letzte Zeitintervall liefert, das zugeordnet wurde, und eine Vielzahl von Zählern (CSO₁ bis CSOₙ) umfaßt, die miteinander in Serie geschaltet sind, so daß der Eingang eines Zählers (CSOᵢ) an den Ausgang des vorhergehenden Zählers (CSOᵢ₋₁) in der Serie angeschlossen ist, wobei der Eingang des ersten Zählers (CSO₁) an den Ausgang der Einheit zur Verwaltung der Zeitintervalle (UGIT) angeschlossen ist, wobei jeder Zähler (CSOᵢ) mit einem Eingang verbunden ist, der ein Anforderungssignal für die Zuordnung eines Zeitintervalls (demᵢ) trägt und mit einem Steuereingang versehen ist, der dazu vorgesehen ist, das Anforderungssignal für eine Zuordnung (demᵢ) zu empfangen, und entweder den Wert des Zeitintervalls (ITin) liefert, welcher an seinem Eingang vorhanden ist, wenn das Anforderungssignal für eine Zuordnung (demᵢ) inaktiv ist, oder den Wert eines Zeitintervalls liefert, welcher an seinem Eingang vorhanden ist, inkrementiert um eine Einheit (ITin + 1), wenn das Anforderungssignal (demᵢ) aktiv ist, wobei der Ausgang jedes Zählers (CSOᵢ) mit dem Eingang eines Registers (RegAdᵢ) verbunden ist, dessen Steuereingang dazu vorgesehen ist, das entsprechende Anforderungssignal (demᵢ) zu empfangen, wobei jedes Register (RegAdᵢ) nun, wenn das entsprechende Anforderungssignal (demᵢ) aktiv ist, ein zugeordnetes Zeitintervallsignal (ITa) liefert.

2. System zur Zuordnung eines Zeitintervalls für eine Zelle eines Kommunikationssystems, welche an dem Eingang einer Eingangsschaltung (CEᵢ) eines Multiplexers vorhanden ist, welcher Multiplexer mehrere zu einer Gruppe zusammengefaßte Eingangsschaltungen umfaßt, die eine Vielzahl von Eingangsschaltungsgruppen (GRCE₁ bis GRCEₙ) bilden, **dadurch gekennzeichnet, daß** es eine Einheit zur Verwaltung von Zeitintervallen (UGIT) umfaßt, die für jedes Zeitintervall das letzte Zeitintervall liefert, das zugeordnet wurde, wobei die Eingangsschaltungsgruppen (GRCE₁ bis GRCEₙ) miteinander in Serie derart verbunden sind, daß der Eingang einer Gruppe (GRCEᵢ) mit dem Ausgang der vorhergehenden Gruppe (GRCEᵢ₋₁) in der Serie verbunden ist, wobei der Eingang der ersten Gruppe mit dem Ausgang der Einheit zur Verwaltung von Zeitintervallen (UGIT) verbunden ist, wobei jede Gruppe mehrere Addierwerke (Addᵢ) umfaßt, die jeweils mit den Anforderungssignalen für die Zuordnung eines Zeitintervalls (demᵢ), das jeweils von den Eingangsschaltungen (CEᵢ) der entsprechenden Gruppe (GRCE) ausgeht, verbunden sind, wobei die Addierwerke (Addᵢ) einen ersten Eingang aufweisen, der mit dem Eingang (Cin) der Gruppe (GRCEᵢ) verbunden ist, wobei jedes Addierwerk (Addⱼ) eines Ranges (j) mit seinem zweiten Eingang an eine Rechenschaltung (Som, Sommⱼ) angeschlossen ist, um hier ein Signal zu empfangen, das für die Anzahl von aktiven Signalen zur Anforderung einer Zuordnung (dem₁ bis demⱼ₋₁) repräsentativ ist, die an den Eingängen, die mit den Addierwerken derselben Gruppe, aber eines niedrigeren Ranges, verbunden sind, sowie an dem Eingang, mit dem es verbunden ist, vorhanden sind, wobei sein Ausgang mit dem Eingang eines Registers (RegAdⱼ) verbunden ist, dessen Steuereingang dazu vorgesehen ist, das zugehörige Signal zur Anforderung einer Zuordnung (demⱼ) zu empfangen, wobei jedes Register (RegAdⱼ) nun, wenn das entsprechende Anforderungssignal (demⱼ) aktiv ist, ein Zeitintervallsignal (ITⱼ) liefert, das der Zelle zugeordnet wird, die am Eingang der entsprechenden Eingangsschaltung vorhanden ist, wobei der Ausgang des letzten Addierwerkes (Addⱼ) einer Gruppe (GRCEᵢ) ferner den Ausgang der Gruppe (GRCEᵢ) bildet.

3. System zur Zuordnung von Zeitintervallen nach Anspruch 1 oder 2, **dadurch gekennzeichnet, daß** die Einheit zur Verwaltung der Zeitintervalle (UGIT) den Wert des Zeitintervalls, der am Ausgang des letzten Zählers (CSOₙ) oder der letzten Gruppe (GRCEₙ) vorhanden ist, empfängt und ihn an den ersten Zähler (CSO₁) oder die erste Gruppe (GRCE₁) als Wert des letzten zugeordneten Zeitintervalls liefert.

4. System zur Zuordnung von Zeitintervallen nach einem der vorhergehenden Ansprüche, **dadurch gekennzeichnet, daß** die Einheit zur Verwaltung der Zeitintervalle (UGIT), wenn der Unterschied zwischen dem Zeitintervallwert des von der Einheit zur Verwaltung der Zeitintervalle (UGIT) empfangenen Signals und dem laufenden Zeitintervallwert (Hloc) gleich Null ist, ein Signal liefert, dessen Wert dem Wert des laufenden Zeitintervalls plus eins (Hloc+1) entspricht.

5. System zur Zuordnung von Zeitintervallen nach einem der vorhergehenden Ansprüche, **dadurch gekennzeichnet, daß** jeder Zähler (CSOᵢ) dazu vorgesehen ist, wenn der Unterschied zwischen dem Zeitintervallwert des an seinem Eingang vorhandenen Signals (ITᵢₙ) und dem laufenden Zeitintervallwert (Hloc) einen vorbestimmten Schwellenwert überschreitet, den Zeitintervallwert (ITᵢₙ) an seinem Eingang nicht mehr zu inkrementieren, auch wenn eine Zelle an dem entsprechenden Eingang (Eᵢ) vorhanden ist.

6. Multiplexer, bestehend aus n Eingängen (E₁ bis Eₙ), die dazu bestimmt sind, Kommunikationszellen in Zellzeitintervallen zu empfangen, und aus einem Ausgang (S), der dazu bestimmt ist, während eines bestimmten Zellzeitintervalls eine der Zellen zu liefern, **dadurch gekennzeichnet, daß** er im wesentlichen gebildet wird von:
- einem System zur Zuordnung eines Zeitintervalls nach einem der Ansprüche 1 bis 5, dessen Eingänge zur Anforderung der Zuordnung eines Zeitintervalls jeweils mit den Eingängen (E₁ bis Eₙ) des Multiplexers verbunden sind,
- einer Vielzahl von Zellspeichern (MC₁ bis MCₙ), deren Schreibeingänge jeweils mit den Eingängen (E₁ bis Eₙ) des Multiplexers verbunden sind, und deren Leseausgänge mit dem Ausgang (S) des Multiplexers verbunden sind, wobei der Schreibadressiereingang eines Speichers (MCᵢ) mit dem Ausgang des entsprechenden Registers (RegAdᵢ) des Zuordnungssystems und der Leseadressiereingang des Speichers mit dem Lokalzeitausgang (Hloc) einer Zeitbasis verbunden ist,
- einer Vielzahl von Anforderungsmitteln (Mtrad₁ bis Mtradₙ), die jeweils Signale zur Anforderung der Zuordnung von Zeitintervallen (dem₁ bis dem₂) erzeugen, wobei jedes der Signale aktiv gesetzt wird, wenn eine Zelle am entsprechenden Eingang des Multiplexers vorhanden ist.

7. Multiplexer nach Anspruch 6, **dadurch gekennzeichnet, daß** ein Zähler (CSOᵢ) oder ein Addierwerk (Addᵢ) und eine Rechenschaltung (Som, Sommᵢ), der zugehörige Zellspeicher (MCᵢ), das zugehörige Register (RegAdᵢ) und die zugehörigen Anforderungsmittel (Mtradᵢ) gemeinsam eine Einheit in einer einzigen Schaltung, genannt Eingangsschaltung (CEᵢ), bilden.

8. Multiplexer nach Anspruch 6, **dadurch gekennzeichnet, daß** ein Zellspeicher (MCᵢ) und das zugehörige Register (RegAdᵢ) gemeinsam eine einzige Schaltung, genannt Eingangsschaltung (CEᵢ), bilden, wobei die Addierwerke (Addᵢ) und die Rechenschaltung (Somm) einer Gruppe (GRCE) zusammengefaßt werden, um eine einzige Steuerschaltung der Gruppe (CGG) zu bilden.

9. Multiplexer nach einem der Ansprüche 6, 7 oder 8, **dadurch gekennzeichnet, daß** die Anforderungsmittel, die dazu dienen, ein aktives Signal zur Anforderung einer Zuordnung (dem) zu erzeugen, von einem Übersetzungsspeicher (Mtrad) gebildet werden, dessen Leseadressiereingang dazu bestimmt ist, die Nummer der virtuellen Schaltung einer Zelle am entsprechenden Eingang zu empfangen.

10. Multiplexer, bestehend aus n Eingängen (E₁ bis Eₙ), die dazu bestimmt sind, Kommunikationszellen in Zellzeitintervallen zu empfangen, und einem Ausgang (S), der dazu bestimmt ist, während eines bestimmten Zellzeitintervalls eine dieser Zellen zu liefern, wobei dieser Multiplexer ebenfalls die Entsendung der Zellen, die einer selben virtuellen Schaltung angehören, in im wesentlichen regelmäßigen, zeitlich gestaffelten Zeitintervallen ermöglicht, **dadurch gekennzeichnet, daß** er im wesentlichen gebildet wird von:
- einem System zur Zuordnung eines Zeitintervalls nach einem der Ansprüche 1 bis 5, dessen Eingänge zur Anforderung der Zuordnung eines Zeitintervalls jeweils an die Eingänge (E₁ bis Eₙ) des Multiplexers angeschlossen sind,
- einer Vielzahl von Zellspeichern (MCel₁ bis MCelₙ), deren Schreibeingänge jeweils mit den Eingängen (E₁ bis Eₙ) des Multiplexers verbunden sind, und dessen Leseausgänge mit dem Ausgang (S) des Multiplexers verbunden sind, wobei der Schreibadressiereingang jedes der Zellspeicher (MCel) mit dem Ausgang einer Schaltung zur Bestimmung der zugehörigen Schreibadresse (CAd) verbunden ist,
- einer Vielzahl von Adreßspeichern (MAd₁ bis MAdₙ), deren Schreibeingang jeweils mit der entsprechenden Schaltung zur Bestimmung der Schreibadresse (CAd) verbunden ist, und deren Schreibadressiereingang jeweils mit dem zugehörigen Ausgang einer Einheit zur Bestimmung der geschätzten Zellemissionszeit (Mtrad, VSA, CDR) verbunden ist, wobei die Leseadressiereingänge der Adreßspeicher (MAd₁ bis Madₙ) mit dem Lokalzeitausgang (Hloc) einer Zeitbasis verbunden sind,
- einer Vielzahl von Emissionsspeichern (MEm), deren Schreibeingang jeweils mit dem Leseausgang des entsprechenden Adreßspeichers (MAd) verbunden ist, dessen Leseausgang jeweils mit dem Leseadressiereingang des entsprechenden Zellspeichers (MCel) verbunden ist, wobei der Schreibadressiereingang eines Emissionsspeichers (MEm₁) mit dem Ausgang des Registers (RegAdᵢ) des entsprechenden Systems zur Zuordnung verbunden ist und der Leseadressiereingang des Speichers mit dem Lokalzeitausgang (Hloc) der Zeitbasis verbunden ist, wobei jedes Signal zur Anforderung einer Zuordnung (demᵢ) zum Zeitpunkt des Lesens des entsprechenden Adreßspeichers aktiv gesetzt wird.

11. Multiplexer nach Anspruch 10, **dadurch gekennzeichnet, daß** jede Einheit zur Bestimmung der geschätzten Zellemissionszeit von einem Übersetzungsspeicher (Mtrad) gebildet wird, von dem jedes der Felder im Lesemodus durch die Nummer der virtuellen Schaltung (VCI), der die am entsprechenden Eingang vorhandene Zelle angehört, adressiert wird, wobei jedes Feld des Übersetzungsspeichers (Mtrad) einen Bereich, in dem eine Periode (T) gespeichert ist, die der entsprechenden virtuellen Schaltung zugeordnet ist, und einen Bereich umfaßt, welcher die theoretische Emissionszeit (Hted) der letzten entsandten Zelle, die der virtuellen Schaltung angehört, enthält, wobei die Leseausgänge des Speichers (Mtrad), die jeweils diesen Bereichen entsprechen, jeweils mit den Eingängen einer Recheneinheit (VSA) verbunden sind, die dazu vorgesehen ist, an ihrem Ausgang das theoretische Emissionszeitsignal (Hte) oder das geschätzte Emissionszeitsignal (Hcc) zu liefern und dieses an den Schreibadressiereingang des entsprechenden Adreßspeichers (MAd) zu liefern, wobei das Signal auch an den Schreibeingang des Übersetzungsspeichers (Mtrad) geliefert wird, um in den entsprechenden Bereich (Hted) geschrieben zu werden.

12. Multiplexer nach Anspruch 11, **dadurch gekennzeichnet, daß** er ferner eine Adressverfügbarkeitsschaltung (GDR) umfaßt, die in Abhängigkeit von der Verfügbarkeit des Feldes des von dem theoretischen Emissionszeitsignal (Hte) adressierten Adreßspeichers (MAd) ein Signal über die geschätzte Emissionszeit (Hee) bestimmt.

13. Multiplexer nach einem der Ansprüche 10 bis 12, **dadurch gekennzeichnet, daß** jede Schaltung zur Bestimmung einer zugehörigen Schreibadresse (CAd) von einem Zähler gebildet wird, der um eine Einheit inkrementiert wird, wenn eine Zelle am entsprechenden Eingang (E) ankommt.
